# EUROPEAN PATENT SPECIFICATION

(11) **EP 0 508 810 B1**
(45) Date of publication and mention of the grant of the patent: **26.06.1996**
(21) Application number: 92303224.7
(22) Date of filing: 10.04.1992
(51) Int. Cl.: C08J 3/12, B29B 9/02, B29B 7/18, B01J 19/20

(54) **Method of production of particulate hydrogel polymer and absorbent resin**
Verfahren zur Herstellung von Partikeln von Hydrogelpolymerisaten und absorbierendes Harz
Procédé pour la préparation de particules d'hydrogels polymères et résine absorbante

(30) Priority: 10.04.1991 JP 77921/91
(43) Date of publication of application: 14.10.1992
(73) Proprietor: NIPPON SHOKUBAI CO., LTD., Chuo-ku, Osaka-shi, Osaka-fu 541 (JP)
(72) Inventor: Irie, Yoshio, Himeji-shi, Hyogo-ken (JP); Hatsuda, Takumi, Himeji-shi, Hyogo-ken (JP); Yonemura, Koichi, Suita-shi, Osaka-fu (JP); Kimura, Kazumasa, Ikama-gun, Nara-ken (JP)
(74) Representative: Rees, David Christopher

(56) References cited:
- EP-A- 0 403 160
- US-A- 4 625 001

## Description

This invention relates to a method for the production of a particulate hydrogel polymer and of an absorbent resin. More particularly, the method entails subjecting a hydrogel polymer which has a cross-linked structure to a shear force.

As absorbent resins, cross-linked polyacrylates, saponified acrylic ester-vinyl acetate copolymers, modified cross-linked polyvinyl alcohol, cross-linked isobutylene-maleic anhydride copolymer, starch-acrylic acid graft polymer, etc are known in the art. These absorbent resins are used in hygienic absorbents such as hygienic napkins and disposable diapers and also as water-retaining agents and dehydrating agents in the agricultural-horticultural field and the civil engineering field.

Known methods for the production of absorbent resins include reversed-phase suspension polymerisation as disclosed in JP-A-57-161408 (1981), JP-A-59-94011 (1982), JP-A-57-158209 (1982) and JP-A-57-198714 (1982), for example, and aqueous solution polymerisation as disclosed in JP-A-59-34101 (1982), JP-B-48-42466 (1973), JP-A-58-49714 (1983), and JP-B-59-37003 (1984) USP 4286082 and USP 4625001, for example.

The reversed-phase suspension polymerisation method, however, required the use of an organic solvent. They consequently not only impair the working environment but also result in the risk of fire and explosion, necessitating the adoption of countermeasures. They are therefore very expensive due to the initial cost of the organic solvent, coupled with the cost for its removal after use. Moreover, since this organic solvent persists, though in minute amounts, in the produced polymer, thorough removal of the organic solvent further increases the production costs. The absorbent resin produced by the reversed-phase suspension polymerisation comprises spherical particles of small diameters. When this absorbent resin is used in a disposable diaper, for example, the handling of this diaper is inconvenient because the minute spherical particles of the resin deposited fibrous absorption cores such as pulp are not retained tenaciously but are readily separated.

In contrast, the methods of aqueous solution polymerisation disclosed in JP-A-57-34101 (1982) and USP No. 4625001 are free from the problems described above. These methods produce a cross-linked polymer bv subjecting the aqueous solution of a monomer (destined to form a cross-linked structure and grow into a hydrogel polymer in the process of aqueous solution polymerisation) and a polymerisation initiator to radical solution polymerisation in a reaction vessel provided with stirring vanes. The radical solution polymerisation continues while the hydrogel polymer being formed in consequence of the polymerisation is finely divided by the shear force generated by the rotation of the stirring vanes. These methods are advantageous in that their operational efficiency is exceptionally high and a finely divided hydrogel polymer having a cross-linked structure in its molecular unit is produced with a high efficiency. Even these methods may be operationally inefficient in the production of an absorbent resin having a high absorption ratio and containing a water-soluble substance in a low concentration.

The phenomenon that the absorption ratio of an absorbent resin increases proportionally as its cross-link density decreases is well known to persons of ordinary skill in the art. It is also known that an absorbent resin produced by a procedure which lowers the cross-link density inevitably contains a water-soluble substance in an unduly large concentration. The water-soluble substance is of such a nature that when the absorbent resin forms a hydrogel structure on contact with a liquid such as water, urine, or a body fluid which is subjected to absorption, this substance is exuded from the hydrogel structure. The water-soluble substance which is extracted by the liquid being absorbed not merely lowers the absorption ratio of the absorbent resin but also aggravates the deterioration of the absorbent resin. Moreover, the undesirable substance which the water-soluble substance produces on contact with a liquid results in an objectionable situation by conferrinq an unpleasant feeling on the user's skin and by contaminating the liquid subjected to absorption, for example.

A desire, therefore, has been expressed for a method which is capable of producing an absorbent resin having a high absorption ratio while containing a water-soluble substance only in a low concentration.

US-A-4654039 and JP-A-1-144404 (1990) propose methods for producing an absorbent resin having a high absorption ratio and containing a water-soluble substance in a low concentration by subjecting to aqueous solution polymerisation a monomer having a free acid type structure or exhibiting a specific neutralisation ratio. These methods of production, however, are disadvantageous in that they require an aftertreatment for neutralisation, they entail a complicated operation and suffer from poor productivity, and they impose restrictions on the conditions of polymerisation.

Hydrogel polymers which are obtained by polymerisation are generally subjected to a drying treatment and then pulverised and marketed as a powdered product. Heretofore, in order to carry out this drying efficiently, devices have been employed for increasing the surface area of the hydrogel polymer to the fullest possible extent. A method for pulverising a hydrogel polymer by extrusion through a perforated plate (JP-B-54-32176 (1979), JP-A-50-136348 (1975), etc) has been proposed, for example. Using this known method however, ideally suited hydrogel polymer particles cannot be obtained because the extrusion disintegrates the hydrogel polymer into a fine powder which then reconglomerates and gives rise to an inferior substance.

A method has been proposed which uses an additive as a lubricant for the purpose of precludinq the possible reconglomeration of a hydrogel polymer which has been disintegrated during pulverisation by extrusion through a perforated plate (JP-A-59-30826 (1984) and JP-59-19172 (1984)). However, this method has the possible disadvantage that the additive may remain in the polymer and will manifest an adverse effect on the performance of a finished product.

EP-A-403160 describes an internal mixer. The mixer includes a mixing chamber havint two rotors and a floating weight which is used to apply the pressure to the material in the mixing chamber.

The aforementioned methods disclosed in JP-A-57-34101 (1982) and USP No. 4625001 are capable of producing hydrogel polymer particles of relatively small diameters. These hydrogel polymer particles measuring not less than 10 mm in size in a proportion of several % by weight to some tens of % by weight, have a wide particle size distribution, and therefore show non-uniformity in their drying efficiency and degree of drying.

Furthermore, using conventional methods for the pulverisation of the hydrogel polymer, hydrogel polymer particles with a sufficient small average diameter can only be obtain with difficulty and at a conspicuously low efficiency. When hydrogel polymer particles are dried to afford a finished product of particles of a desired size, the dried hydrogel polymer particles must be pulverised if the original particles have a large average particle diameter. The pulverisation gives rise to minute particles which are smaller than the desired size. It is universally known to persons or ordinary skill in the art that these minute particles are undesirable both from the point of view of performance of the absorbent resin and convenience of handling.

No method has yet been established for enabling hydrogel polymer particles and an absorbent resin which have a high absorption ratio and contain a water-soluble substance only in small concentrations to be produced with high operational efficiency by a convenient process. Neither has there been established a method capable of highly efficiently producing hydrogel polymer particles which contain no such additive as a lubricant, exhibit a narrow particle size distribution, and excel in drying efficiency. A method capable of efficiently producing hydrogel polymer particles having a sufficiently small average diameter remains yet to be established.

An object of this invention, therefore, is to provide a method for producing hydrogel polymer particles and an absorbent resin having a high absorption ratio and containing only small concentrations of water-soluble substances.

Another object of this invention is to enable such a hydrogel polymer and an absorbent resin to be produced with high operational efficiency by a convenient process.

Still another object of this invention is to provide a method for highly efficiently producing hydrogel polymer particles containing no such additive as a lubricant, exhibiting a narrow particle size distribution, and excelling in efficiency of drying.

Yet another object of this invention is to provide a method for producing highly efficiently hydrogel polymer particles having a sufficiently small average particle diameter.

The present invention is defined in the accompanying claims to which reference should now be made.

The objects of this invention described above are accomplished by a method for the production of particulate hydrogel polymer which comprises subjecting a hydrogel polymer possessing a cross-linked structure to a shear force, thereby finely dividing said hydrogel polymer characterised in that the shear force is applied continually to the hydrogel polymer while contained within a vessel, the hydrogel polymer being maintained at a temperature in the range of from 40° to 110°C and under a mechanically exerted pressure in the range of from 0.98 to 147 kPa (0.01 to 1.5kg/cm²).

These objects are also accomplished by a method for the production of an absorbent resin which comprises applying a shear force on a hydrogel polymer possessing a cross-linked structure, thereby finely dividing the hydrogel polymer into a particulate hydrogel polymer and drying the resultant particulate hydrogel polymer, characterised in that the shear force applied continually to the hydrogel polymer while contained within a vessel, the hydrogel polymer being maintained at a temperature in the range of from 40° to 110°C and under a mechanically exerted pressure in the range of from 0.98 to 147 kPa (0.01 to 1.5kg/cm²).

By the execution of the method of this invention as described above, hydrogel polymer particles and an absorbent resin which have a high absorption ratio and contain a water-soluble substance only in a small concentration can be produced in a high operational efficiency. The method of this invention also enables hydrogel polymer containing no such additive as a lubricant, exhibiting a narrow particle size distribution, and excelling in efficiency of drying to be produced in high operational efficiency. This invention also allows production of an absorbent resin exhibiting a high absorption speed and containing unduly minute particles in a small concentration. It allows production of an absorbent resin exhibiting a high absorption speed under application of pressure. It further enables an absorbent resin having an extremely small residual monomer content to be produced in a high operational efficiency.

The invention can be put into practice in various ways, some embodiments of which will now be described by way of example with reference to the accompanying drawings in which:-
Figure 1 is a cross section illustrating schematically one embodiment of a vessel to be used for the exertion of shear force on hydrogel polymer in accordance with this invention;
Figure 2 is a schematic cross section of the lower section of Figure 1 along the line II-II;
Figure 3 is a cross section illustrating schematically another embodiment of the vessel to be used for the exertion of shear force on a hydrogel polymer in accordance with this invention;
Figure 4A and 4B are cross sections illustrating schematically still another embodiment of the vessel to be used in this invention;
Figure 5 is a cross section illustrating schematically yet another example of the vessel to be used in the exertion of shear force of a hydrogen polymer in accordance with this invention;
Figure 6 is a schematic diagram of a device to be used for drying hydrogel polymer particles obtained by this invention; and
Figure 7 is a schematic diagram of a device to be used for determining the amount of water absorbed under application of pressure by absorbent resin obtained by this invention.

The hydrogel polymer of this invention has no particular restriction except for the requirement that it should be a hydrogel which possesses a cross-linked structure and assumes the form of gel on inclusion of water. It is a hydrogel polymer having a water content generally in the range of from 40 to 90% by weight, preferably from 50 to 80% by weight. The term "water content" of a hydrogel polymer as used in this specification refers to the proportion of water to the total weight of the hydrogel polymer as expressed in % by weight. It is essential for effective use in this invention that the hydrogel polymer should possess a cross-linked structure. A hydrogel polymer having no cross-linked structure fails to fulfil the objects of

The hydrogel polymer of this invention can be obtained by a method which comprises: placing in a mould frame a monomer which, on aqueous solution polymerisation, forms a cross-linked structure and grows into a hydrogel polymer; and then polymerising the monomer (JP-A-55-133413 (1980)). An alternative method comprises polymerising the monomer component in a kneader provided internally with a stirring shaft capable of finely dividing the formed hydrogel polymer (JP-A-57-34101 (1982)).

Monomer components which are effectively usable in the method of polymerisation described above include: water-soluble unsaturated monomers for example, anionic monomers such as (meth)acrylic acid, maleic acid (anhydride), fumaric acid, crotonic acid, itaconic acid, 2-(meth)acryloyl ethanesulfonic acid, 2-(meth)acryloyl propanesulfonic acid, 2-(meth)acrylamide-2-methyl propanesulfonic acid, vinyl sulphonic acid, and styrene sulphonic acid and salts thereof; nonionic hydrophillic group-containing monomers such as (meth)acrylamide, N-substituted (meth)acrylamides, 2-hydroxyethyl (meth)acrylate, 2-hydroxypropyl (meth)acrylate, methoxypolyethylene glycol (meth)acrylate, and polyethylene glycol (meth)acrylate; and amino group-containing unsaturated monomers such as N,N-dimethylaminoethyl (meth)acrylate, N,N-dimethylaminopropyl (meth)acrylate, and N,N-dimethylaminopropyl (meth)acrylamide and quaternisation products thereof, for example. Optionally, a hydrophobic monomer such as an acrylic ester like methyl (meth)acrylate, ethyl (meth)acrylate, or butyl (meth)acrylate or vinyl acetate or vinyl propionate may be used in an amount such as to avoid conspicuously impeding the hydrophilicity of the produced hydrogel polymer. As the monomer component, one member or a mixture of two or more members selected from the typical example of the monomer components cited above can be used. In consideration of the various absorption properties of the absorbent resin to be finally obtained, it is preferably to use at least one member selected from the group consisting of (meth)acrylic acid (and salts thereof), 2-(meth)acryloyl ethanesulfonic acid (and salts thereof), 2-(meth)acrylamide-2-methyl propanesulfonic acid (and salts thereof), (meth)acrylamide, methoxy polyethylene glycol (meth)acrylate, N,N-dimethyl aminoethyl (meth)acrylate, and quaternisation products thereof. The monomer component preferably contains one member selected from(meth)acrylic acid and salts thereof as an essential constituent. Most preferably, 30 to 90 mol% of the (meth)acrylic acid is neutralised with a basic substance.

The hydrogel polymer of this invention may be a self-linking type which can be produced without the use of a cross-linking agent or may be a type which can be produced by the use of a cross-linking agent containing a polymerisinq unsaturated qroup and/or a reactive functional group in a sufficient amount for the various properties of the produced absorbent resin to reach desired levels. The amount to be used is generally 0.001 to 1.0 mol%, preferably 0.01 to 0.5 mol% compared to the monomer component.

As typical examples of this cross-linking agent, N,N'-methylenebis(meth)acrylamide, (poly)ethylene glycol (meth)acrylate, glycerol tri(meth)acrylate, trimethylol propane tri(meth)acrylate, triallylamine, triallylcyanurate, triallyl isocyanurate, glycidyl (meth)acrylates, (poly)ethylene glycol, diethylene glycol, (poly)glycerol, propylene glycol, diethanol amine, trimethylol propane, pentaerythritol, (poly)ethylene glycol diglycidyl ether, (poly)glycerol polyglicidyl ether, epichlorohydrin, ethylene diamine, polyethylene imine, (poly)aluminium chloride, aluminium sulphate, calcium chloride, and magnesium sulphate may be cited. One member or a mixture of two or more members selected from among the typical examples cited above in due consideration of the reactivity may be used.

In the production of the hydrogel polymer, formation of a graft link or a complex may be effected in conjunction with the polymerisation by polymerising the aforementioned monomer component in the presence of a hydrophillic macromelecular compound such as starch, cellulose, or polyvinyl alcohol.

The polymerisation of the monomer component mentioned above can be effected by the use of a water-soluble radical polymerisation initiator such as, for example, ammonium persulphate, potassium persulphate, hydrogen peroxide, t-butyl hydroperoxide, or 2,2-azobis-amidinopropane dihydrochloride.

The hydrogel polymer of this invention is required to be a hydroqel only in the sense that it is a water-containing gel, in which polymerisation of the monomer component is either still proceeding or is complete. Generally, a hydrogel polymer possessing a cross-linked structure assumes the form of a hydrogel like the hydrogel polymer of this invention when the degree of polymerisation is about several %, so the shear force under mechanical pressure may be loaded at an optional time to the hydrogel having at least several % of polymerisation degree. The hydrogel has polymerisation degree in the range of preferably from 10 to 100%, and more preferably from 20 to 100%. Of course, the monomer components prior to becoming a water-containing gel may be subjected to a conventional mixing operation. However, attention must be given when shear forces are applied to the monomer component while its degree of polymerisation is low, since it is suspected that undesirable weight, may arise when these shear forces are excessive.

The production of the hydrogel polymer particles of this invention is accomplished by keeping the hydrogel polymer under the conditions mentioned above and meanwhile exerting the shear force thereon. This production can be performed in any desired manner capable of fulfilling these conditions. As concrete examples of the manner of effecting this production, the following procedures may be cited.

1. Exertion of the shear force on the hydrogel polymer after completion of the polymerisation under the conditions mentioned above.

2. Exertion of the shear force on the hydrogel polymer during the process of the polymerisation under the conditions mentioned above.

3. Continuation of the polymerisation and simultaneous exertion of the shear force on the produced hydrogel polymer under the conditions mentioned above.

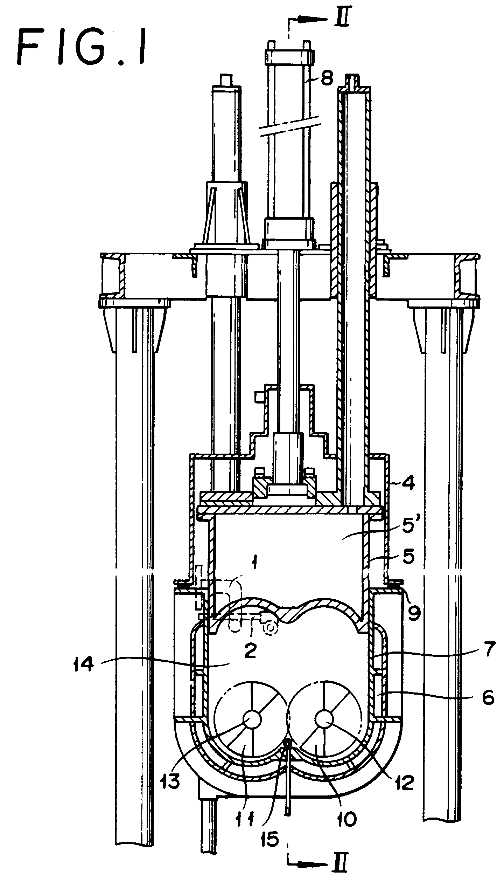

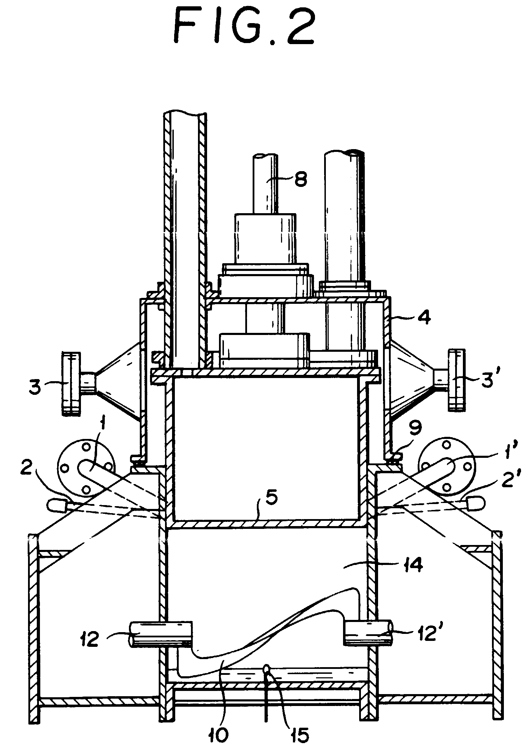

The apparatus shown in Figure 1 is suitable for the second or third procedure above. Figure 2 is a schematic cross section taken through Figure 1 along the line II-II. As illustrated in Figure 1 and 2, rotary arms 10 and 11 for exerting shear force on a hydrogel polymer are fixed along the longitudinal direction of a vessel 7 by rotary stirring shafts 12, 12' and 13, 13' (not shown). A pressing lid 5 is located in the open part of the vessel 7 and is arranged to exert mechanical pressure. It is shaped in conformity to the peripherally moving parts of the rotary arms so as to avoid abstructing their rotation even when this pressing lid 5 is lowered to its lower limit. In the state of the apparatus illustrated in Figure 1, i.e. in the state in which the vessel 7 is retained substantially in an airtightly sealed state by the pressing lid 5 and, at the same time, a liquid inlet 1 and a gas inlet 2 are kept open relative to the vessel 7, the aqueous solution of a monomer component described above and an inert gas are supplied to the vessel 7. The amount of the aqueous solution of the monomer component to be supplied in this case is generally in the range of from 50 to 150% of the volume available for shear (the volume formed by the rotation of the rotary arms of the rotary stirring shafts minus the total volume of the rotary arms). The inert gas introduced via the gas inlet 2 is passed through the interior of the vessel 7 and discharged via a gas outlet 1' or a nozzle 2'.

At a desired time after polymerisation of the monomer component to form a hydrogel polymer has been initiated, a cylinder 8 is hydraulically or pneumatically moved to lower the pressing lid 5 onto the hydrogel polymer and apply a desired load to the hydrogel polymer. The rotary arms 10 and 11 are set into rotation to exert a continual shear force on the hydrogel polymer.

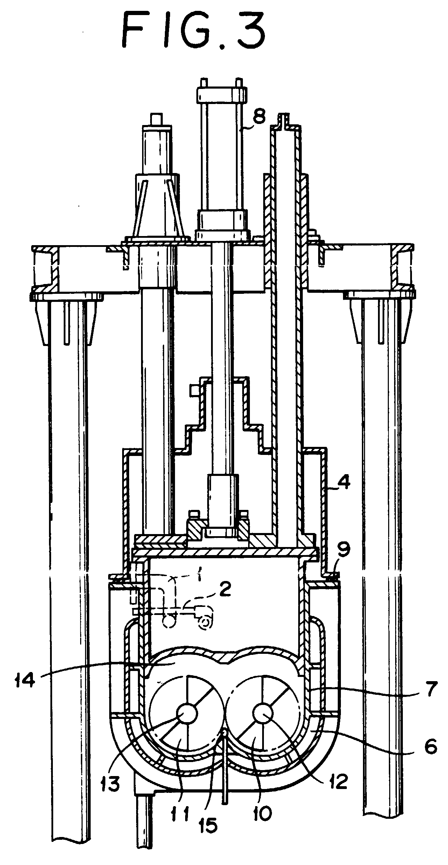

One example of an ensuing state of the apparatus is illustrated in Figure 3. Here, the liquid inlet 1 and the gas inlet 2 are sealed off by the pressing lid 5 and are not allowed to admit the hydrogel polymer. In the meantime, the inert gas introduced via the gas inlet 2 is forwarded through a gap between the wall of the vessel 7 and the wall of the pressing lid 5 into a stirring space 14. The entire procedure starting from the charging of the vessel with the aqueous solution of the monomer component, the polymerisation and the exertion of shear force on the formed hydrogel polymer kept under a load, and terminating in the removal of the produced hydrogel polymer particles can be carried out under an atmosphere of an inert gas as described above. The position of the liquid inlet 1 and that of the gas inlet 2 are desired to be higher than the level of the surface of the hydrogel polymer without an applied load.

As illustrated in Figures 1 to 3, a cover 4 is located about the external surface of the pressing lid 5 in such a manner as to be vertically reciprocable relative to the pressing lid 5. This cover 4 is shaped like a box and is open at its lower end. The bottom rim of the cover 4 has a flange which opposes a corresponding flange on the vessel 7. The flange of the cover 4 is provided with a sealing member 9.

When the pressing lid 5 is elevated, the cover 4 comes into contact with the pressing lid 5 and is then lifted thereby. When the pressing lid 5 is moved downwards by the cylinder 8 and brought to the position at which the bottom of the pressing lid 5 engages the vessel 7, the flange of the cover 4 contacts the flange of the vessel 7 through the seal member 9, with the result that the space inside the cover 4 will be sealed off from the ambient air by virtue of its own weight. After the flanges have come into mutual contact through the seal member 9, the pressing lid 5 alone is moved downwards by the cylinder 8.

The cover 4 is provided with a gas inlet 3 and a gas outlet 3'. While the apparatus is in the condition illustrated in Figure 1, the interior of the cover 4 can be displaced with an inert gas atmosphere by supplying inert gas via the gas inlet 3. Though this cover 4 is not an indispensable component for the apparatus of this invention, it constitutes itself a desirable addition to rendering of the inert gas atmosphere in the vessel 7 more perfect.

Suitable apparatus to be used with the vessel in this invention would include an ordinary batchwise kneader furnished with a pressing lid at its opening, a mechanically pressing kneader, an internal mixer, a Banbury mixer, etc. Of the alternatives, the mechanically pressing kneader might be preferred.

In this invention, the number of the rotary arms is preferably at least two. The kneader is preferably of the twin arm type. Suitable shapes for the rotary arms include the sigma (δ) type, the Z type, the spiral (S) type, the masticator type, the fishtail type, and the type having the cross section of a biconvex lens, for example. When the rotary arms mentioned above are of the two arm type, the combination of the shapes of these rotary arms may be that of the sigma type with the spiral type of the Z type. The two rotary arms of such a combination of shapes are rotated in mutually opposite directions at an equal speed or at different speeds. The manners of combination of rotations of the two rotary arms include the overlap type and the tangential type, for example. The combinations can be selected to suit the various properties of the hydrogel polymer, such as viscosity. Generally when the hydrogel polymer is a highly viscous substance, the tangential type is suitable. When the rotary arms are used in an internal mixer, the two pairs of rolls may be rotated in the same direction but with a difference in phase, and the shear force may be exerted downwardly on the hydrogel polymer, kept under pressure in the same manner as in a pressing kneader or a Banbury mixer.

The rotary arms may be made of stainless steel, for example.

The rate of rotation of the rotary arms to be used in this invention, though variable in dependence upon the various properties of the hydrogel polymer, such as its viscosity, may be in the range of from 0.01 to 10 m/s, preferably from 0.1 to 5 m/s, in terms of peripheral speed.

The apparatus of the embodiment described above is provided with a jacket 6 which is adapted to heat or cool the hydrogel polymer, however, the means for heating or cooling the hydrogel polymer is not limited to a jacket. The pressing lid 5 and/or the rotary arms may be constructed so as to allow the passage therein of a medium for controlling the temperature, for example.

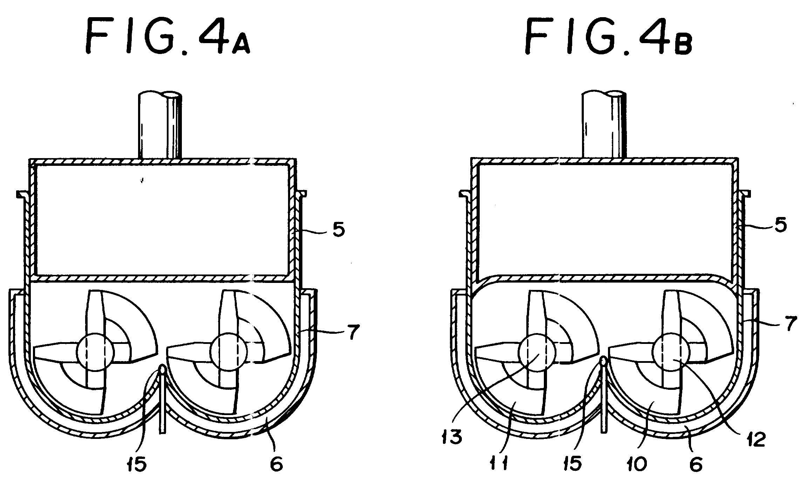

With regard to the shape of the pressing lid to be used in this invention, a flat plate (Figure 4A) or a shape conforming to the peripherally moving parts only on the wall surface side of the vessel (Figure 4B) may be used as alternatives to a shape conforming to the peripherally moving parts of the rotary arms as illustrated in Figure 1. The shape of the pressing lid is desired to be such that the hydrogel polymer will be wholly stirred and the shear force will be exerted uniformly on the whole of the hydrogen polymer. A pressing lid with the shape illustrated in Figure 1 is preferable in respect that this pressing lid does not allow easy retention of the hydrogel polymer in the vessel. The expression "uniform exertion of the shear force" mentioned above means the situation that a specific portion of the hydrogel polymer is not continuously retained at a specific position inside the vessel and the shear force is not continuously exerted only on part of the hydrogel polymer.

In this invention, the pressing lid is used for the purpose of applying a load in the range of from 0.01 to is the sum of the weight of the pressing lid itself and the pneumatic or hydraulic pressure applied downwardly to the pressing lid. The load thus applied to the hydrogel polymer must be in the range of from 0.01 to 1.5 kg/cm², preferably from 0.05 to 1.0 kg/cm². If the load applied to the hydrogel polymer is less than 0.01 kg/cm², the shear force is not effectively exerted on the hydrogel polymer and the production of the hydrogel polymer particles aimed at by this invention can only be obtained with difficulty or after along processing times. Conversely, if the load applied to the hydrogel polymer exceeds 1.5 kg/cm², the physical properties of the produced hydrogel polymer are impaired because the motive force necessary for the exertion of the shear force on the hydrogel polymer is unduly large and the hydrogel polymer is compelled to assume a kneading state.

The pressing lid is preferable set at such a position inside the vessel that the volume of the interior of the vessel is in the range of from 1.1 to 1.8, preferably from 1.2 to 1.7, times the volume, Vₒ, of the hydrogel polymer and in the range of from 1.0 to 2.0, preferably 1.0 to 1.8, times the volume exposed to the shear force (hereinafter referred to as "effective shear volume"). The expression "volume exposed to he shear force", V₁, as used herein refers to the volume which remains after deduction of the total volume of the rotary stirring shafts and the rotary arms from the volume formed by the maximum rotation of the rotary arms of the rotary stirring shafts. If the volume of the interior of the vessel is less than 1.1 times the volume, Vₒ, of the hydrogel polymer, a disadvantage arises in that the physical properties of the produced hydrogel polymer will be impaired because the motive force necessary for the exertion of the shear force on the hydrogel polymer is unduly large and the hydrogel polymer itself is compelled to assume a kneading state. Conversely, if the volume of the interior of the vessel exceeds 1.8 times the volume, Vₒ, of the hydrogel polymer, a disadvantage ensues in that the shear force will not be effectively exerted on the hydrogel and the production of the hydrogel polymer particles aimed at by this invention will only be obtained with difficulty or with an unduly long processing time.

If the volume of the interior of the vessel exceeds 2.0 times the effective shear volume, V₁, a disadvantage arises that the shear force will not be effectively exerted on the hydrogel polymer and the production of the hydrogel polymer particles aimed at by this invention will only be obtained with difficulty or with an unduly long processing time.

The hydrogel polymer of this invention has no particular restriction except for the sole requirement that it should possess a size suitable for introduction into the vessel to be employed for the execution of this invention. The method of this invention can be applied effectively even to the comminuted hydrogel polymer which is obtained by the method disclosed in JP-A-57-34101 (1982), for example.

For this invention, it is an essential requirement that the hydrogel polymer should be heated to a temperature in the range of from 40° to 110°C, preferably from 40° to 100°C, more preferably 50° to 95°C. If the temperature of heating of the hydrogel polymer is less than 40°C, unduly large friction occurs between the plane of shear and the hydrogel polymer or between the adjacent hydrogel polymer particles, and the physical properties of the produced hydrogel polymer are liable to be degraded. Conversely, if this temperature exceeds 110°C, evaporation of water from the hydrogel polymer occurs vigorously and the hydrogel polymer will consequently include rising bubbles, and the possibility will arise that the shear force will not be sufficiently exerted on the hydrogel polymer and the production of hydrogel polymer particles of sufficiently small particle diameters will not be attained. Deterioration of the hydrogel polymer will advance to the extent of conspicuously increasing the water-soluble substance content.

The invention imposes no particular limit on the duration of the exertion of the shear force. Generally, the time required for the exertion of the shear force can be decreased in proportion as the rate of rotation of the rotary stirring shafts is increased and the magnitude of the load applied to the hydrogel polymer is increased. The expression "applying shear force continually" as recited herein refers to the repetition of the exertion of the shear force on any specific portion of the hydrogel polymer. This manner of exertion of the shear force is different from the transient exertion of shear force which is observed as in the extrusion of a hydrogel polymer through a perforated plate by the use of a screw type extruding device, for example. When such a transient or temporal shear force is applied, a particulate hydrogel polymer having the required properties, especially its absorption rate, cannot be obtained.

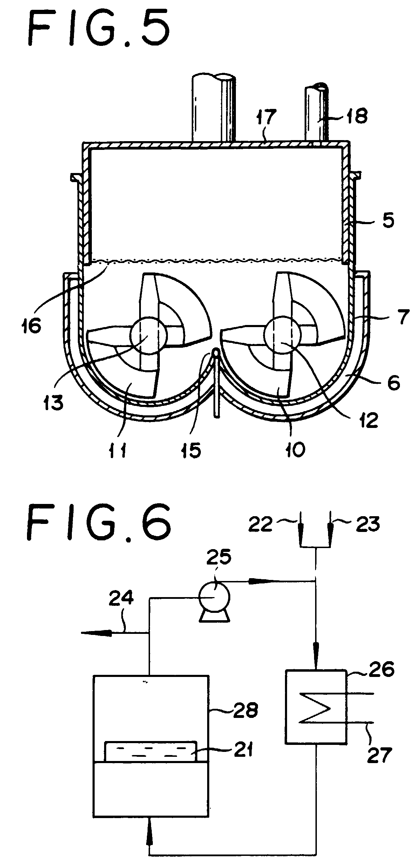

Figure 5 is a cross section illustrating schematically another particular example of a vessel to be used for the exertion of shear force on the hydrogel polymer in accordance with this invention.

The vessel 7 illustrated in Figure 5 is identical in construction to the vessel illustrated in Figure 1, bottom part 16 and is provided in its upper part 17 with a tube 18 adapted to increase the pressure of the atmosphere inside the vessel. The pressure of the atmosphere inside the vessel 5 can therefore be decreased via the meshed bottom part 16, thus suppressing the otherwise inevitable rise of the temperature inside the vessel due to the heat generated during polymerisation while at the same time, allowing the polymerisation to proceed. If the heat of polymerisation which is generated when the monomer component is polymerised to form the hydrogel polymer and the shear force is exerted on the produced hydrogel polymer is not removed sufficiently, the temperature of the reaction system may arise excessively. The polymerisation mixture may then undergo the phenomenon of bumping in an extreme case, and the produced polymer will be of inferior quality. For the purpose of effecting removal of this heat more efficiently, the interior of the pressing lid and/or the rotary arms may be adapted to circulate cooling water in addition to the jacket and consequently increase the surface area available for effective heat transfer and the removal of heat. If the removal of the heat is insufficient despite all these measures, then a method resorting to diminution of the pressure inside the vessel can be effectively used.

Where a vessel as shown in Figure 5 is used, the degree of pressure reduction is preferably in the approximate range of from 1 to 500 mmHg (0.13 to 66.5 kPa), preferably from 1 to 400 mmHg (0.13 to 53.2 kPa).

In the method of production according to this invention, additives such as a surfactant may be incorporated in the hydrogel polymer at any desired time inclusive of the periods before and after the exertion of of facilitating the adjustment of the particle diameters of the hydrogel polymer or improving the convenience of handling of the hydrogel polymer particles produced. Furthermore, for the purpose of conferring new functions on the hydrogel polymer particles and the absorbent resin to be produced, the exertion of the shear force on the hydrogel polymer may be performed in the presence of water-soluble polymers, deodorants, perfumes, plant growth promoters, fungicides, bactericides, defoaming agents, pigments, dyes, activated carbon, and hydrophillic short fibres, for example.

The method for the production of the absorbent resin of this invention comprises drying the hydrogel polymer particles which have been obtained by the method of production described above.

For the drying step mentioned above, any of the methods known to the art may be adopted. The means which are available for this drying include for example a box-type drying device, a ventilation type drying device, a ventilation band drying device, a ventilation type vertical drying device and a rotary drying device.

The temperature to be used for the drying of the hydrogel polymer may be the same as that known to the art. The temperature may be in the range of from 80° to 250°C, preferably from 100° to 200°C, and is preferably effected by a gas containing at least steam and possessing a dewpoint in the range of from 50° to 100°C. If this temperature exceeds 250°C, the polymer may be impaired and may decompose. The time required for drying the hydrogel polymer particles obtained by the method of this invention is notably short as compared with that required for drying a conventional hydrogel polymer, regardless of which method of drying is adopted.

The method of drying disclosed in JP-A-64-26604 (1989) is particularly well suited to this invention in the drying of the hydrogel polymer particles. While this prior art method is ideal for producing a polymer having a low residual monomer content, it has the disadvantage that the decrease of the residual monomer content is attained only with the sacrifice of the efficiency of drying (efficiency of production). However, owing to the use of the hydrogel polymer particles which are obtained by the method of production of this invention, the efficiency of drying is notably improved and the requirements of the present invention that the absorption ratio should be high and the content of water-soluble substance should be small are satisfied, and the production of an absorbent resin having a notably low residual monomer content is attained with high efficiency.

The method for the production of an absorbent resin aimed at by this invention comprises drying the hydrogel polymer particles obtained by the aforementioned method of production and then pulverising and/or disintegrating the dried hydrogel polymer particles. In the present invention, for the production of the pulverised absorbent resin, any known method previously adopted for the pulverisation of hydrogel polymers can be adopted. The means which are available for pulverisation include highspeed rotary pulverisers (such as pin mills, hammer mills, etc.), screw mills (such as coffee mills), and roll mills, for example. Since the hydrogel polymer particles which are obtained by the method of this invention can be uniformly dried, absorbent resins containing only a small concentration of minute particles can be obtained from the dried hydrogel polymer particles without necessitating an intermediate step for the removal of undried particles by disintegrating using a roll mill.

The absorbent resin thus obtained can be converted by conventional surface treatment methods into an absorbent having improved surface properties. One example of a modifying method comprises causing the absorbent resin to react with a cross-linking agent containing in its molecular unit at least two functional groups capable of reacting with the functional group contained in the absorbent resin, thereby heightening the density of cross-links in the surface region of the absorbent resin. Further examples of modifying methods include mixing the absorbent resin with a hydrophobic substance and, when necessary, causing them to react with each other, and imparting hydrophobicity to the absorbent resin.

Absorbent resins obtained by the execution of the method of this invention or absorbents resulting from the surface treatments described above may be subjected to conventional methods of agglomeration.

The absorbent resin or absorbent can be mixed with water-soluble polymeric substances, deodorants, perfumes, medicines, plant growth promoters, fungicides, bactericides, pigments, dyes, carbon black, activated carbon,and short fibres, to acquire new functions.

This invention will now be described more specifically below with reference to working examples and controls. It should be noted, however, that the scope of this invention is not limited by these working examples.

The particle size distribution of hydrogel polymer particles as reduced to a dry basis, the particle size distribution of dried pulverised particles, the absorption ratio of dried pulverised particles used as an absorbent resin, the water-soluble substance content, and the absorption rate, which are mentioned in the following examples, represent the numerical values determined by the following testing methods.

### A. Particle size distribution of hydrogel polymer particles are reduced to the dry basis:

In 1,200g of an aqueous 20 wt% sodium chloride solution, 25g of sample hydrogel polymer particles (solids content α wt%) were stirred for 60 minutes with a stirrer chip rotated at 300 rpm. After completion of the stirring, the resultant dispersion was transferred into superposed sieves (9.5mm, 2.0mm, 0.85mm, 0.60mm, 0.30mm, and 0.075mm in mesh size) and 6,000g of an aqueous 20 wt% sodium chloride solution was slowly poured down into the superposed sieves to classify the hydrogel polymer particles. The classified fractions of hydrogel polymer particles on the sieves were thoroughly drained of water and weighed.

The classification was carried out in wet conditions and so the mesh size (wet) must be converted to the corresponding dry mesh size for the respective hydrogel particles in their dry state. The dry mesh size R(100) is given by formula (1) below.

On a logarithmic probability chart, the particle sizes of the hydrogel polymer particles as reduced to the dry basis and corresponding to 100 wt% solids were plotted to obtain a particle size distribution.$\text{R(100)(mm) =} \sqrt[\text{3}]{\frac{\text{α}}{\text{100}} \text{·} \frac{\text{25}}{\text{w}}} \text{×j} \left(\text{mm}\right)$ wherein R (100) is a mesh size (mm) of a sieve reduced to 100% by weight of hydrogel polymer particles, w is the total weight (g) of the classified and drained fraction of hydrogel polymer, and γ is the mesh size (mm) of the sieve used for separating the fraction of hydrogel polymer swelled in an aqueous 20% sodium chloride solution.

### B. Particle size distribution of dried and pulverised polymer:

JIS standard sieves of 16 mesh, 30 mesh, 50 mesh, and 100 mesh (corresponding to screen pore sizes of 1000µm, 500µm, 300µm and 150µm respectively) were superposed on a receptacle plate. On the superposed sieves, 39g of a dried and pulverised sample of hydrogel polymer was placed and shaken thereon for 10 minutes with a sieve shaker. The fractions stopped on the sieves were weighed and their amounts were reported in % by weight.

### C. Absorption ratio of dried and pulverised polymer:

About 0.2g of dried and pulverised hydrogel polymer classified with JIS standard sieves of 16 to 100 mesh was accurately weighed out, placed uniformly in a teabag-like pouch of non-woven fabric (40mm x 150mm), and kept immersed in an aqueous 0.9% saline solution for 60 minutes. The wet sample was weighed. The absorption ratio was found in accordance with the following formula 2.$\text{Absorption ratio (g/g) = [Weight after absorption (g) -Blank (g)]/[Weight of dried and pulverised polymer (g)]}$

### D. Content of water-soluble substance in dried and pulverised polymer:

In 1,000ml of deionised water, 0.5g of dried and pulverised hydrogel polymer classified with JIS standard sieves of 16 to 100 mesh was dispersed and stirred for 16 hours, and passed through a filter paper (TOKYO #6), to obtain about 100g of a filtrate. Accurately 100g of the filtrate was concentrated to about 2 to 3ml with a rotary evaporator, diluted with deionised water, transferred into a petri dish (WO g), and evaporated to dryness (W₁ g) at 120°C. The content of water-soluble substance was found in accordance with the following formula 3.

Content of water-soluble substance is given by:-$\frac{{\text{W}}_{\text{1}} {\text{-W}}_{\text{0}}}{\text{0.5}} \text{x} \frac{\text{1000}}{\text{100}} \text{x 100}$

### E. Absorption rate of dried and pulverised polymer:

In a 100-ml beaker, 50ml (30°C) of an aqueous 0.9% saline solution was stirred at 600 rpm with a stirrer chip. Into the beaker, 2.0g of dried and pulverised hydrogel polymer classified with JIS standard sieves of 16 to 100 mesh was instantaneously introduced. At this time, a stop watch was started. The stop watch was stopped at the point of time at which the stirrer chip exposed in the central part of the current of the saline solution became concealed by the swollen gel polymer. The time recorded was given as the absorption rate.

### Example 1

A pressure kneader 7 made of stainless steel was used, having an inner volume of 75 litres, provided with twin arm Z vanes having an effective shear volume of 24.9 litres and a thermometer 15, and covered with a jacket 6 as illustrated in Figure 1 and 2. Nitrogen was introduced at a rate of 50 litres/minute through a gas inlet 2 and the exhaust gas was discharged through a gas outlet 1'. A pressure lid 5 and a cover 4 were kept in the positions illustrated in Figure 1 and a liquid inlet 1 and a nozzle 2' were kept closed. At this time, the cover 4 remained in close contact with the pressure kneader 7 through a seal member 9, by virtue of its own weight. In the meantime, nitrogen was introduced at a rate of 80 litres/minute through a gas inlet 3 and the exhaust gas was discharged through a gas outlet 3'. This operation was continued for 10 minutes to flush the interior of the system with nitrogen and the gas outlet 3' was closed.

In a separate vessel, an aqueous solution composed of 30kg of an aqueous solution of a monomer component comprising 75 mol% of sodium acrylate and 25 mol% of acrylic acid (having a monomer component content of 37% by weight) and 18.6g of trimethylol propane triacrylate as a cross-linking agent (0.05 mol% based on the monomer component) was blown with nitrogen to expel dissolved oxygen. The aqueous solution of the monomer component consequently purged of dissolved oxygen was pressurised with nitrogen and introduced via the liquid inlet 1. Then, the two vanes of the kneader were set rotating at 30 rpm and hot water at 35°C was passed through the jacket 6 and a jacket 5' inside the pressure lid to heat the monomer component.

Subsequently, an aqueous solution containing 15.0 g of sodium persulphate as a polymerisation initiator and an aqueous solution containing 0.75g of L-ascorbic acid were added via the liquid inlet 1. After the addition was completed, the liquid inlet 1 was closed. The monomer component began to polymerise four minutes after the addition of the polymerisation initiator and, after the further elapse of 13 minutes, reached the peak temperature, 89°C, of polymerisation. The stirring was continued further at 30 prm.

A particulate hydrogel polymer (A) was obtained 25 minutes after the start of polymerisation. About 10% by weight of this hydrogel polymer (A) consisted of particles exceeding 10mm in size. The amount of hydrogel polymer particles exceeding 10mm in size was determined by taking a sample 500g in size from the produced hydrogel polymer, separating particles exceeding 10mm in size from the sample by visual observation, and calculating the proportion of the separated particles to the total weight, 500g, of the sample. It was reported in terms of % by weight.

The hydrogel polymer (A) was adjusted to about 65°C by elevating the temperature of the hot water in the jacket to 70°C and stirred by rotating the vanes at 30 rpm and the pressure lid 5 was lowered meanwhile to the position shown in Figure 3 by actuating a cylinder 8 with a hydraulic system. Specifically, the oil pressure of the cylinder 8 was adjusted so as to exert a mechanical pressure of 0.40 kg/cm² on the hydrogel polymer (A). Under an atmosphere of nitrogen, the hydrogel polymer (A) thus kept in a pressurised state was subjected to shear force for 10 minutes, to impart a finely divided form to the hydrogel polymer. At this time, the pressure lid was 43mm above the position of complete closure (gel agitation space 14/effective shear volume = 1). The ratio, gel agitation space 14/effective shear volume, was 1.33 and the ratio, gel agitation space 14/volume of gel, was 1.35. The produced hydroqel polymer (1) was taken out by actuating the cylinder 8 with the hydraulic system thereby raising the pressure lid 5 and tilting the pressure kneader 7.

Samples, 1kg each, of the hydrogel polymer (A) and the hydrogel polymer (1) were severally placed on a metallic net tray 200mm x 280mm x 80mm and dried in a hot air oven at 160°C for 30 minutes. The sample of the hydrogel polymer (A) was dried non-uniformly and contained an undried part and could not be pulverised. So, the hydrogel polymer (A) was given additional drying for 35 minutes. The dried hydrogel polymers were severally pulverised with a roll mill, to obtain a dry powder (A) and a dry powder (1) both of 16 mesh (1000µm) pass. The hydrogel polymers thus produced were tested for particles size distribution and the dry powders were tested for particle size distribution, absorption ratio as an absorbent resin, a water soluble content, and absorption rate by the methods described above. The results are shown in Table 1.

### Control 1

A hydrogel polymer (1a) for comparison was obtained by following the procedure of Example 1, except that the pressure lid 5 was not lowered to the position illustrated in Figure 3 and the hydrogel polymer (A), not in a pressurised state as shown in Figure 1, was exposed to shear force under an atmosphere of nitrogen for 10 minutes. The hydrogel polymer (1a) for comparison thus obtained was dried in a hot air oven at 160°C for 30 minutes similarly to the hydrogel polymer of Example 1. It was not uniformly dried and contained an undried portion and could not be pulverised. So, the hydrogel polymer (1a) for comparison was further dried for 30 minutes and then pulverised in the same manner as in Example 1, to produce a dry powder (1a) for comparison. The hydrogel polymer for comparison and the dry powder for comparison were tested in the same manner as in Example 1. The results are as shown in Table 1.

### Example 2

A hydrogel polymer (2) was obtained by following the procedure of Example 1, except that the pressure lid 5 was lowered to the position of Figure 3 by actuating the cylinder 8 with the hydraulic system after the monomer component had reached the peak temperature, 89°C, of polymerisation. A dry powder (2) was obtained by drying the produced hydrogel polymer (2) in a hot air oven and then pulverising the dried hydrogel polymer in the same manner as in Example 1. The hydrogel polymer and the dry powder were tested in the same manner as in Example 1. The results are as shown in Table 1

### Example 3

The procedure of Example 1 was repeated, except that the pressure lid 5 was lowered to a position 20mm above the position of complete closure immediately after the onset of polymerisation and kept at this position thereafter. The monomer component began to polymerise 3 minutes after the addition of the polymerisation initiator and, after the further elapse of 12 minutes, reached the peak temperature, 86°C, of polymerisation. The stirring was continued further at 30 rpm.

After the elapse of 40 minutes following the start of polymerisation, a particulate hydrogel polymer (3) was obtained at 60°C. When the degree of polymerisation empirically estimated by the generation of heat of polymerisation reached about 60%, pressure began to be exerted on the hydroqel polymer. The mechanical pressure thereon was adjusted to 0.12 kg/cm².

Eventually, the pressure lid 5 settled at a position 73mm above the position of complete closure, at which point the ratio, gel agitation space/effective shear volume, was 1.57 and the ratio, gel agitation space 14/volume of gel, was 1.59. The hydrogel polymer (3) consequently obtained was dried in a hot air oven and pulverised in the same manner as in Example 1, to obtain a dry powder (3). The hydrogel polymer and the dry powder obtained as described above were tested in the same manner as in Example 1. The results are as shown in Table 1.

### Example 4

The procedure of Example 1 was repeated, except that the amount of the aqueous solution of the monomer component was changed to 36kg (monomer component content 37% by weight), the amount of the trimethylol propane triacrylate as a cross-linking agent was changed to 22.3g (0.05 mol% based on the monomer component), and the pressure lid 5 was lowered to a position 35mm above the position of complete closure immediately after onset of polymerisation. The monomer component began to polymerise three minutes after the addition of the polymerisation initiator and, after the further elapse of 12 minutes, reached the peak temperature, 94°C, of polymerisation. The stirring was continued further at 30 rpm.

After 25 minutes from the onset of polymerisation, a particulate hydrogel polymer (4) at a temperature of 70°C was obtained. When the ratio of polymerisation empirically estimated by the generation of heat of polymerisation reached about 60%, pressure began to be exerted on the hydrogel polymer. The mechanical pressure thereon was adjusted to 0.40 kg/cm².

Eventually the pressure lid 5 settled at a position 63mm above the position of complete closure, at which point the ratio, gel agitation space 14/effective shear volume, was 1.49 and the ratio, gel agitation space 14/volume of gel was 1.25. The hydrogel polymer (4) consequently obtained was dried in a hot air oven and pulverised in the same manner as in Example 1, to obtain a dry powder (4). The hydrogel polymer and the dry powder obtained as described above were tested in the same manner as in Example 1. The results are as shown in Table 2.

### Example 5

A hydrogel polymer (A) similar to that obtained in Example 1 was produced by carrying out polymerisation in the same manner as in Example 1. This hydrogel polymer (A) was adjusted to about 50°C and the vanes were kept rotating at 20 rpm and the pressure lid 5 was lowered meantime by the hydraulic system. The oil pressure of the cylinder 8 was adjusted so that the mechanical pressure applied to the hydrogel polymer (A) has 0.12 kg/cm². The hydrogel polymer (A) thus kept in a pressurised state was exposed to shear force under an atmosphere of nitrogen for 15 minutes. Consequently, a finely divided hydrogel polymer (5) was obtained. At this time, the pressure lid 5 was at a position 73mm above the position of complete closure. The ratio, gel agitation space 14/effective shear volume, was 1.57 and the ratio, gel agitation space 14/volume of gel, was 1.59. The hydrogel polymer (5) thus obtained was dried in a hot air oven and pulverised in the same manner as in Example 1, to obtain a dry powder (5). The hydrogel polymer and the dry powder obtained as described above were tested in the same manner as in Example 1. The results are as shown in Table 2.

### Example 6

A hydrogel polymer (6) was obtained by following the procedure of Example 5, except that the temperature of the hydrogel polymer (A) was changed to 70°C, the rotation of the vanes to 10 rpm, and the mechanical pressure applied to the hydrogel polymer (A) to 1.0 kg/cm². At this time, the pressure lid 5 was at a position 15mm above the position of complete closure. The ratio, gel agitation space 14/effective shear volume, was 1.12 and the ratio, gel agitation space 14/volume of gel, was 1.13. The hydrogel polymer (6) thus obtained was dried in a hot air oven and pulverised in the same manner as in Example 5, to obtain a dry powder (6). The hydrogel polymer and the dry powder obtained as described above were tested in the same manner as in Example 5. The results are as shown in Table 2.

### Control 2

A hydrogel polymer (A) similar to that obtained in Example 1 was produced by carrying out polymerisation in the same manner as in Example 1. This hydrogel polymer (A) was adjusted to 37°C and then subjected to the same procedure as in Example 1. The hydrogel polymer (A) assumed a kneaded state and failed to form a particulate hydrogel polymer.

### Control 3

The procedure of Example 1 was repeated, except that the interior of the system was adjusted so as to apply a mechanical pressure of 1.52 kg/cm² to the hydrogel polymer (A). The scale reading of an ammeter of the drive motor for the vanes far exceeded the set limit and the kneader became inoperable.

### Control 4

The procedure of Example 1 was repeated, except that the pressure lid 5 was lowered to a position 115mm above the position of complete closure immediately after the onset of polymerisation. The monomer component began to polymerise three minutes after the addition of the polymerisation initiator and, after the further elapse of 12 minutes, reached the peak temperature, 88°C, of polymerisation. The stirring was further continued at 30 rpm.

After the elapse of 25 minutes following the start of polymerisation, a hydrogel polymer (4a) for comparison was obtained at 62°C. The motion of the pressure lid 5 and the scale reading of the ammeter of the drive motor for the vanes indicated that virtually no pressure was applied to the hydrogel polymer, although the pressure lid 5 was in contact with the hydrogel. At this time, the ratio, gel agitation space 14/effective shear volume, was 1.89 and the ratio, gel agitation space 14/volume of gel, was 1.91. The hydrogel polymer (4a) for comparison was dried in a hot air oven at 160°C for 30 minutes in the same manner as in Example 1. It was dried non-uniformly and contained an undried part and could not be pulverised. So, the hydrogel polymer (4a) was further dried for 30 minutes and the dry powder consequently obtained was pulverised in the same manner as in Example 1, to produce a dry powder (4a) for comparison. The hydrogel polymer and the dry powder thus obtained for comparison were tested in the same manner as in Example 1. The results are as shown in Table 3.

### Example 7

A kneader of stainless steel was used having an overall inner volume of 10 litres, provided with twin arm type sigma vanes having an effective shear volume of 5.5 litres and a thermometer, and covered with a jacket. This was charged with 6.6kg of an aqueous solution of a monomer component comprising 75 mol% of sodium acrylate and 25 mol% of 2-acrylamide-2-methyl propane sulphonic acid (monomer component content 35% by weight) and 2.3g of N,N-methylenebisacrylamide as a cross-linking agent (0.08 mol% based on the monomer component) and blown with nitrogen was to flush the interior of the reaction system with nitrogen gas. Then, the two kneader vanes were set rotating at 45 rpm, the jacket was heated by passage therethrough of hot water at 35°C, and 2.3g of sodium persulphate as a polymerisation initiator and 0.1g of L-ascorbic acid were added to the reaction system. The monomer component began to polymerise two minutes after the addition of the polymerisation initiator and, after the further elapse of 10 minutes, reached the peak temperature, 89°C, of polymerisation. The stirring was continued further at 45 rpm. A particulate hydrogel polymer (B) was obtained 25 minutes after the start of polymerisation.

At this time, about 15% by weight of the gel polymer (B) consisted of particles exceeding 10mm in size. The hydrogel polymer (B) was adjusted to about 70°C by elevating the temperature of the hot water in the jacket to 75°, the vanes are kept rotating at 45 rpm, and the pressure lid was lowered. The interior of the kneader was adjusted so as to apply a mechanical pressure of about 0.06 kg/cm² to the hydrogel polymer (B) and the hydrogel polymer (B) thus kept in a pressurised state was exposed to shear force under an atmosphere of nitrogen for 15 minutes. Consequently, a finely divided hydrogel polymer (7) was obtained. At this time, the pressure lid was at a position 25mm above the position of complete closure (namely, the ratio, gel agitation space/effective shear volume = 1). The ratio, gel agitation space/effective shear volume, was 1.25 and the ratio, gel agitation space/volume of gel, was 1.25.

The hydrogel polymer (7) thus obtained was dried in a hot air oven and pulverised in the same manner as in Example 1, to obtain a dry powder (7). The hydrogel polymer and the dry powder obtained as described above were tested in the same manner as in Example 1. The results are as shown in Table 3.

### Example 8

A kneader identical to the kneader of Example 7, except that the pressure lid was provided with a reticular bottom and adapted to evacuate the interior of the reaction system, was charged with the aqueous solution of the same monomer content as used in Example 7 and blow with nitrogen gas to flush the interior of the reaction system with nitrogen gas. Then, the two kneader vanes were kept rotating at 45 rpm, the jacket was heated by passage therethrough of hot water at 35°C, and 2.3g of sodium persulphate as a polymerisation initiator and 0.1g of L-ascorbic acid were added to the reaction system. The pressure lid was lowered to a position 10mm above the position of complete closure immediately after the onset of polymerisation. At this time, the gaseous pressure inside the reaction system was lowered to 100 mmHg. The monomer component began to polymerise two minutes after the addition of the polymerisation initiator and, after the further elapse of 10 minutes, reached the peak temperature, 70°C. of polymerisation. Then, the temperature of hot water in the jacket was elevated to 75°C so as to keep the temperature of the hydrogel polymer at about 70°C and the stirring was continued under a vacuum. At this time, the pressure lid was at a position 25mm above the position of complete closure. The ratio, gel agitation space/effective shear volume, was 1.25 and the ratio, gel agitation space/volume of gel, was 1.25.

After the elapse of 20 minutes following the onset of polymerisation, the interior of the reaction system was returned to the normal pressure (760 mmHg) and the stirring was continued further at 20 rpm. A finely divided hydrogel polymer (8) was produced 50 minutes after the start of polymerisation. The hydrogel polymer (8) thus obtained was dried in a hot air oven and pulverised in the same manner as in Example 7, to produce a dry powder (8). The hydrogel polymer and the dry powder obtained as described above were tested in the same manner as in Example 7. The results are as shown in Table 3.

### Control 5

A hydrogel polymer (5a) for comparison was obtained by repeating the procedure of Example 7, except that the pressure lid was not lowered and the hydrogel polymer (B), not in a pressurised state was exposed to shear force under an atmosphere of nitrogen for 15 minutes. The hydrogel polymer (5a) for comparison thus obtained was dried in a hot air oven at 160°C for 30 minutes in the same manner as in Example 7. It was dried non-uniformly and contained an undried part and could not be pulverised. So, the hydrogel polymer (5a) was dried further for 30 minutes. The dry powder consequently obtained was pulverised in the same manner as in Example 7 to obtain a dry powder (5a) for comparison. The hydrogel polymer for comparison and the dry powder for comparison were tested in the same manner as in Example 7. The results are as shown in Table 3.

### Example 9

A hydrogel polymer (9) was obtained by following the procedure of Example 1, except that 37.5g of sodium persulphate was used as a polymerisation initiator. In a hot air drier (a draft type drier as illustrated in Figure 6), the hydrogel polymer (9) was spread in a thickness of 35mm. A hot steam-air mixed gas having a temperature of 105°C and a dew point of 85°C was produced by introducing gases from a fresh air inlet pipe 22 and a stream inlet pipe 23 into a heat exchanger 26 and heating the resultant gas mixture with the heat transfer medium introduced through a heat medium inlet pipe 27. This was blown against the bed of the hydrogel polymer at a rate of 0.8 m/sec. This treatment was continued for 50 minutes and the hydrogel polymer was converted into a bulk, dried to a water content of about 8%. Part of the mixed gas was released via a discharge pipe 24 and circulated by a blower 25 to the heat exchanger 26.

The dry bulk consequently obtained was pulverised in the same manner as in Example 1, to form a dry powder (9). The hydrogel polymer and the dry powder obtained as described above were tested in the same manner as in Example 1. The results are shown as in Table 4. By the method described below, the residual monomer content of the dry powder was found to be 20 ppm.

In 1,000 ml of deionised water, 0.05g of the dry powder was dispersed and stirred for two hours. Then, the resultant solution was passed through a Wattman filter paper, GF/F (particle retaining ability 0.7 microns) and the filtrate consequently obtained was analysed by liquid chromatography.

### Control 6

A hydrogel polymer (6a) for comparison was obtained by repeating the procedure of Control 1, except that 37.5g of sodium persulphate was used as a polymerisation initiator. The hydrogel polymer (6a) thus obtained was dried in the same manner as in Example 9. It was dried non-uniformly and contained an undried part and could not be pulverised. So, the hydrogel polymer (6a) for comparison was dried further for 70 minutes. The resultant dried bulk was pulverised in the same manner as in Example 9, to produce a dry powder (6a) for comparison. The hydrogel polymer for comparison and the dry powder for comparison obtained as described above were tested in the same manner as in Example 9. The results of the test were as shown in Table 4. The residual monomer content of the dry powder determined by the same method as used in Example 9 was 20 ppm.

### Example 10

One hundred (100) parts by weight of the dry powder (1) obtained in Example 1 was mixed with a mixture comprising 1 part by weight of glycerol, 2 parts by weight of water, and 8 parts by weight of isopropanol. The resultant mixture was placed in a bowl immersed in an oil bath (195°C) and heat-treated in a stirred state for 45 minutes to form an absorbent (10). The absorbent was tested in the same manner as in Example 1. The results of the test were as shown in Table 4. It was further tested for absorption performance under pressure by the following method. The absorption ratio under pressure for the periods of 5 minutes and 30 minutes were respectively 17 ml/g and 26 ml/g.

Method for testing absorption performance under pressure:

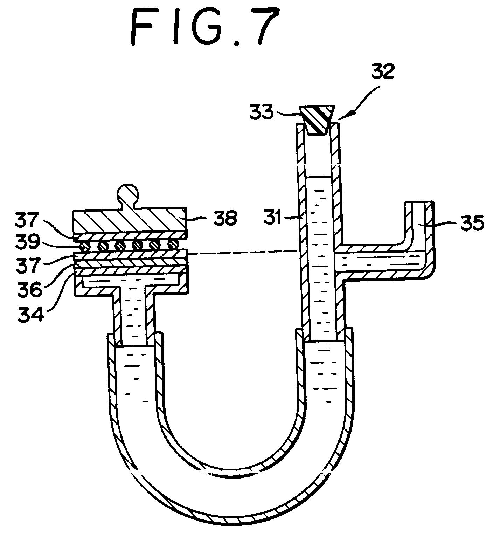

Using the apparatus illustrated in Figure 7, the amounts of water absorbed by a given sample under pressure for the periods of 5 minutes and 30 minutes were measured to determine absorption rate under pressure and absorption ratio under pressure. An upper mouth 32 of a buret 31 was stoppered with a plug 33 and a measuring base 34 and an air inlet 35 were set flush with each other. On a glass filter 36 of a diameter of 70mm set in the measuring base 34, a filter paper 37, 0.2g of the absorbent 39, and a filter paper 37 were mounted and a weight 38 of 20 g/cm² was further superposed thereon and these items were left absorbing artificial urine (containing 1.9% of urea, 0.8% of NaCl, 0.1% of CaCl.2, and 0.1% of MgSO.4). The amount of the artificial urine absorbed was reported as the absorption ratio (ml/g) under pressure.

### Control 7:

An absorbent (7a) for comparison was obtained by repeating the procedure of Example 10, except that the dry powder (1a) for comparison obtained in Control 1 was used in place of the dry powder (1). The absorbent thus obtained was tested by the same method as used in Example 1. The results of the test were as shown in Table 4. When this absorbent was tested for absorption ratio under pressure by the same method as used in Example 10, the absorption ratios under pressure for the periods of 5 minutes and 30 minutes were respectively 11 ml/g and 25 ml/g.

**Table 1**

| | Example 1 | | Control 1 | Example 2 | Example 3 |
|---|---|---|---|---|---|
| Mechanical pressure (kg/cm²) | 0.40 | | Nothing | 0.40 | 0.12 |
| Gel temperature (°C) | 65 | | | 89 | 60∼86 |

| Hydrogel polymer | (1) | (A) | (1a) | (2) | (3) |
|---|---|---|---|---|---|
| Coarse gel* (%) | 0 | 10 | 8 | 0 | 0 |
| Particle size distribution on dry basis (%) | | | | | |
| 850 µm on | 9 | 50 | 46 | 7 | 5 |
| 150µm thru | 16 | 13 | 14 | 18 | 18 |

| Dry powder | (1) | (A) | (1a) | (2) | (3) |
|---|---|---|---|---|---|
| Particle size distribution % | | | | | |
| 16 mesh on | 0 | 3 | 2 | 1 | 0 |
| 16∼30 mesh | 20 | 19 | 19 | 19 | 18 |
| 30∼50 mesh | 51 | 43 | 44 | 49 | 51 |
| 50∼100 mesh | 22 | 21 | 21 | 24 | 25 |
| 100 mesh thru | 7 | 14 | 14 | 7 | 6 |
| Absorption ratio (g/g) | 51 | 46 | 46 | 51 | 52 |
| Water soluble content (%) | 10 | 10 | 11 | 10 | 9 |
| Absorption rate (sec) | 59 | 88 | 86 | 57 | 55 |

| | | | | | |
|---|---|---|---|---|---|
| * : Particle size exceeding 10 mm in size | | | | | |

**Table 2**

| | Example 4 | Example 5 | Example 6 | Control 2 | Control 3 |
|---|---|---|---|---|---|
| Mechanical pressure (kg/cm²) | 0.40 | 0.12 | 1.0 | 0.40 | 1.52 |
| Gel temperature (°C) | 70∼94 | 50 | 70 | 37 | 65 |

| Hydrogel polymer | (4) | (5) | (6) | | |
|---|---|---|---|---|---|
| Coarse gel* (%) | 0 | 0 | 0 | kneading state | operation impossible |
| Particle size distribution on dry basis (%) | | | | | |
| 850 µm on | 10 | 5 | 4 | | |
| 150µm thru | 16 | 20 | 19 | | |

| Dry powder | (4) | (5) | (6) | | |
|---|---|---|---|---|---|
| Particle size distribution % | | | | | |
| 16 mesh on | 0 | 0 | 0 | | |
| 16∼30 mesh | 21 | 15 | 12 | | |
| 30∼50 mesh | 51 | 49 | 51 | | |
| 50∼100 mesh | 22 | 27 | 28 | | |
| 100 mesh thru | 6 | 9 | 9 | | |
| Absorption ratio (g/g) | 52 | 51 | 51 | | |
| Water soluble content (%) | 10 | 11 | 10 | | |
| Absorption rate (sec) | 58 | 60 | 53 | | |

| | | | | | |
|---|---|---|---|---|---|
| * : Particle size exceeding 10 mm in size | | | | | |

**Table 3**

| | Control 4 | Example 7 | Example 8 | Control 5 |
|---|---|---|---|---|
| Mechanical pressure (kg/cm²) | ∼0 | 0.06 | 0.06 | Nothing |
| Gel temperature (°C) | | 70 | ∼70 | |

| Hydrogel polymer | (4a) | (7) | (8) | (5a) |
|---|---|---|---|---|
| Coarse gel* (%) | 8 | 0 | 0 | 13 |
| Particle size distribution on dry basis (%) | | | | |
| 850 µm on | 45 | 14 | 13 | 52 |
| 150µm thru | 15 | 13 | 13 | 10 |

| Dry powder | (4a) | (7) | (8) | (5a) |
|---|---|---|---|---|
| Particle size distribution % | | | | |
| 16 mesh on | 2 | 0 | 0 | 3 |
| 16∼30 mesh | 19 | 18 | 19 | 22 |
| 30∼50 mesh | 45 | 53 | 55 | 41 |
| 50∼100 mesh | 20 | 23 | 20 | 19 |
| 100 mesh thru | 14 | 6 | 6 | 15 |
| Absorption ratio (g/g) | 46 | 48 | 48 | 43 |
| Water soluble content (%) | 10 | 7 | 6 | 7 |
| Absorption rate (sec) | 84 | 52 | 50 | 82 |

| | | | | |
|---|---|---|---|---|
| * : Particle size exceeding 10 mm in size | | | | |

**Table 4**

| | Example 9 | Control 6 | Example 10 | Control 7 |
|---|---|---|---|---|
| Mechanical pressure (kg/cm²) | 0.40 | Nothing | | |
| Gel temperature (°C) | 65 | | | |

| Hydrogel polymer | (9) | (6a) | | |
|---|---|---|---|---|
| Coarse gel* (%) | 0 | 9 | | |
| Particle size distribution on dry basis (%) | | | | |
| 850 µm on | 8 | 48 | | |
| 150µm thru | 17 | 13 | | |

| Dry powder | (9) | (6a) | Absorbent (10) | Absorbent (7a) |
|---|---|---|---|---|
| Particle size distribution (%) | | | | |
| 16 mesh on | 0 | 2 | 0 | 3 |
| 16∼30 mesh | 20 | 20 | 23 | 21 |
| 30∼50 mesh | 50 | 42 | 54 | 47 |
| 50∼100 mesh | 23 | 21 | 19 | 19 |
| 100 mesh thru | 7 | 15 | 4 | 10 |
| Absorption ratio (g/g) | 49 | 44 | 48 | 43 |
| Water soluble content (%) | 10 | 11 | 9 | 10 |
| Absorption rate (sec) | 58 | 86 | 54 | 80 |

| | | | | |
|---|---|---|---|---|
| * : Particle size exceeding 10 mm in size | | | | |

## Claims

1. A method for the production of a particulate hydrogel polymer which comprises subjecting a hydrogel polymer possessing a cross-linked structure to a shear force, thereby finely dividing said hydrogel polymer, characterised in that the shear force is applied continually to the hydrogel polymer while contained within a vessel, the hydrogel polymer being maintained at a temperature in the range of from 40° to 110°C and under a mechanically exerted pressure in the ranqe of from 0.98 to 147 kPa (0.01 to 1.5kg/cm²).

2. A method as claimed in Claim 1, characterised in that the shear force comprises kneading, the vessel comprising a kneader provided with a plurality of rotary stirring shafts.

3. A method as claimed in Claim 1 or Claim 2, characterised in that the said vessel has an inner volume 1.0 to 2.0 times the volume of space (effective shear volume) V₁ which remains after the deduction of the total volume or the rotary stirring shafts and rotary arms from the volume of space formed by the rotation of the rotary arms of said rotary stirring shafts and 1.1 to 1.8 times the volume V₀ of the hydrogel polymer.

4. A method as claimed in Claim 1, 2 or 3, characterised in that the hydrogel polymer is formed by effecting polymerisation of an ethylenically unsaturated monomer with a cross-linking agent.

5. A method as claimed in Claim 4, characterised in that the hydrogel polymer is a hydrogel polymer having a polymerisation degree based on the monomer component in the range of 10 to 100%.

6. A method as claimed in Claim 5, characterised in that the hydrogel polymer is a hydrogel polymer having a polymerisation degree based on the monomer component in the range of from 20 to 100%.

7. A method as claimed in Claim 4 or Claim 5, characterised in that the polymerisation of the monomer component is performed at sub-atmospheric pressure.

8. A method as claimed in Claim 7, characterised in that the polymerisation is carried out at a pressure in the range of from 0.13 to 66.7 kPa (1 to 500 mmHg).

9. A method as claimed in Claims 4 to 8, characterised in that the ethylenically unsaturated monomer is at least one member selected from (meth)acrylic acid (and salts thereof), 2-(meth)acryloyl ethanesulfonic acid (and salts thereof) , 2 (meth) acrylamide-2-methyl propanesulfonic acid (and salts thereof), (meth) acrylamide, methoxypolyethylene glycol (meth)acrylate, N, N-dimethylaminoethyl (meth)acrylate, and quaternisation products thereof.

10. A method as claimed in any of Claims 4 to 8, characterised in that the ethylenically unsaturated monomer is a (meth)acrylic acid and/or a salt thereof.

11. A method as claimed in claim 10, characterised in that the (meth)acrylic acid has 30 to 90 mol% thereof neutralised with a basic substance.

12. A method as claimed in any preceding Claim, characterised in that the hydrogel polymer has a water content in the range of from 40 to 90% by weight.

13. A method for the production of an absorbent resin which comprises applying a shear force on a hydrogel polymer possessing a cross-linked structure, thereby finely dividing the hydrogel polymer into a particulate hydrogel polymer, and drying the resultant particulate hydrogel polymer, characterised in that the shear force is applied continually to the hydrogel polymer while contained within a vessel, the hydrogel polymer being maintained at a temperature in the range of from 40° to 110°C and under a mechanically exerted pressure in the range of from 0.98 to 147 kPa (0.01 to 1.5kg/cm²).

14. A method as claimed in Claim 13, characterised by pulverising and/or disintegrating the dried particulate hydrogel polymer.

15. A method as claimed in Claim 13 or Claim 1.4, characterised in that the drying is effected by exposing the hydrogel polymer at a temperature in the range of from 80° to 250°C to a gas containing at least steam and possessing a dew point in the range of from 50° to 100°C.

16. A method as claimed in Claim 14 or Claim 15, characterised in that the pulverisation and/or disintegration is performed with a roll mill (roll-rotating pulverising device).

17. A method for the production of an absorbent resin, which comprises mixing an absorbent resin obtained by a method as claimed in Claim 13 or Claim 14 with a cross-linking agent possessing at least two functional groups capable of reacting with the functional group possessed by the absorbent resin and allowing them to react with each other thereby heightening a cross-link density in the surface region of the absorbent resin.

## Patentansprüche

1. Verfahren zur Herstellung eines feinteiligen polymeren Hydrogels, bei dem mittels einer Scherkraft ein polymeres Hydrogel mit einer vernetzten Struktur behandelt wird, wobei das genannte polymere Hydrogel fein zerteilt wird, **dadurch gekennzeichnet,** daß die Scherkraft kontinuierlich auf das in einem Gefäß enthaltene polymere Hydrogel einwirkt, das bei einer Temperatur im Bereich von 40° bis 110°C und unter einem mechanisch ausgeübten Druck im Bereich von 0,98 bis 147 kPa (0,01 bis 1,5 kg/cm²) gehalten wird.

2. Verfahren gemäß Anspruch 1, **dadurch gekennzeichnet,** daß die Scherkraft durch Kneten ausgeübt wird und daß das Gefäß einen Kneter aufweist, der mit einer Vielzahl von rotierenden Rührwellen ausgerüstet ist.

3. Verfahren nach einem der Ansprüche 1 oder 2, **dadurch gekennzeichnet,** daß das genannte Gefäß ein Innenvolumen hat, das etwa dem 1,0 bis 2,0fachen Raumvolumen (effektives Schervolumen) V₁ entspricht, das übrig bleibt, wenn man das Gesamtvolumen der rotierenden Rührwellen und der rotierenden Arme vom Raumvolumen, das durch die Rotation der rotierenden Arme der genannten rotierenden Rührwellen gebildet wird, abzieht, sowie dem 1,1 bis 1,8fachen des Volumens V₀ des polymeren Hydrogels.

4. Verfahren nach einem der Ansprüche 1, 2 oder 3, **dadurch gekennzeichnet,** daß das polymere Hydrogel dadurch gebildet wird, daß ein ethylenisch ungesättigtes Monomer mit einem Vernetzungsreagenz zur Polymerisation gebracht wird.

5. Verfahren nach Anspruch 4, **dadurch gekennzeichnet,** daß das polymere Hydrogel ein polymeres Hydrogel mit einem Polymerisationsgrad bezüglich der Monomerkomponente im Bereich von 10 bis 100 % ist.

6. Verfahren nach Anspruch 5, **dadurch gekennzeichnet,** daß das polymere Hydrogel ein polymeres Hydrogel mit einem Polymerisationsgrad bezüglich der Monomerkomponente im Bereich von 20 bis 100 % ist.

7. Verfahren nach Anspruch 4 oder 5, **dadurch gekennzeichnet,** daß die Polymerisation der Monomerkomponente unter vermindertem atmosphärischen Druck ausgeführt wird.

8. Verfahren nach Anspruch 7, **dadurch gekennzeichnet,** daß die Polymerisation bei einem Druck im Bereich von 0,13 bis 66,7 kPa (1 bis 500 mmHg) ausgeführt wird.

9. Verfahren nach einem der Ansprüche 4 bis 8, **dadurch gekennzeichnet,** daß das ethylenisch ungesättigte Monomere mindestens ein Mitglied, ausgewählt aus (Meth)acrylsäure (und deren Salzen), 2-(Meth)acryloylethansulfonsäure (und deren Salzen), 2-(Meth)acrylamid-2-methylpropansulfonsäure (und deren Salzen), (Meth)acrylamid, Methoxypolyethylenglycol-(meth)acrylat, N,N-Dimethylaminoethyl-(meth)acrylat sowie Quarternisierungsprodukten davon, ist.

10. Verfahren nach einem der Ansprüche 4 bis 8, **dadurch gekennzeichnet,** daß das ethylenisch ungesättigte Monomere eine (Meth)acrylsäure und/oder ein Salz davon ist.

11. Verfahren nach Anspruch 10, **dadurch gekennzeichnet,** daß die (Meth)Acrylsäure zu 30 bis 90 mol-% mit einer basischen Substanz neutralisiert wurde.

12. Verfahren nach einem der vorhergehenden Ansprüche, **dadurch gekennzeichnet,** daß das polymere Hydrogel einen Wassergehalt im Bereich von 40 bis 90 Gew.-% besitzt.

13. Verfahren zur Herstellung eines absorbierenden Harzes, bei dem mittels einer Scherkraft ein polymeres Hydrogel mit einer vernetzten Struktur behandelt wird, wobei das polymere Hydrogel in ein feinteiliges polymeres Hydrogel fein zerteilt wird, und das erhaltene feinteilige polymere Hydrogel getrocknet wird, **dadurch gekennzeichnet,** daß die Scherkraft kontinuierlich auf das in einem Gefäß enthaltene polymere Hydrogel einwirkt, das bei einer Temperatur im Bereich von 40° bis 110°C und unter einem mechanisch ausgeübten Druck im Bereich von 0,98 bis 147 kPa (0,01 bis 1,5 kg/cm²) gehalten wird.

14. Verfahren nach Anspruch 13, **dadurch gekennzeichnet,** daß das getrocknete, feinteilige polymere Hydrogel pulverisiert und/oder vermahlen wird.

15. Verfahren nach Anspruch 13 oder 14, **dadurch gekennzeichnet,** daß zum Trocknen das polymere Hydrogel bei einer Temperatur im Bereich von 80° bis 250°C einem Gas ausgesetzt wird, das zumindest Dampf enthält und einen Taupunkt im Bereich von 50° bis 100°C besitzt.

16. Verfahren nach Anspruch 14 oder 15, **dadurch gekennzeichnet,** daß das Pulverisieren und/oder das Vermahlen mit einer Walzenmühle (Pulverisierungsvorrichtung mit rotierenden Walzen) ausgeführt wird.

17. Verfahren zur Herstellung eines absorbierenden Harzes, bei dem man ein absorbierendes Harz, das nach einem Verfahren gemäß Anspruch 13 oder 14 erhalten wurde, mit einem Vernetzungsreagenz mischt, welches mindestens zwei funktionelle Gruppen besitzt, die mit der funktionellen Gruppe des absorbierenden Harzes reagieren können, und anschließend miteinander reagieren läßt, wobei die Vernetzungsdichte in der Oberflächenregion des absorbierenden Harzes erhöht wird.

## Revendications

1. Un procédé d'obtention d'un hydrogel polymère particulaire qui consiste à soumettre un hydrogel polymère possédant une structure réticulée à une force de cisaillement de façon à diviser finement ledit hydrogel polymère, caractérisé en ce que la force de cisaillement est appliquée en continu à l'hydrogel polymère tandis qu'il est contenu dans un récipient, l'hydrogel polymère étant maintenu à une température comprise dans la gamme de 40°C à 110°C et sous une pression exercée mécaniquement comprise dans la gamme de 0,98 à 147 kPa (0,01 à 1,5 kg/cm²).

2. Un procédé selon la revendication 1, caractérisé en ce que la force de cisaillement comprend un malaxage, le récipient comprenant un malaxeur muni d'une pluralité d'axes d'agitation rotatifs.

3. Un procédé selon la revendication 1 ou la revendication 2, caractérisé en ce que ledit récipient a un volume interne de 1,0 à 2,0 fois le volume de l'espace V₁ (le volume de cisaillement efficace) qui reste après la déduction du volume total des axes d'agitation rotatifs et des bras rotatifs à partir du volume de l'espace formé par la rotation des bras rotatifs desdits axes d'agitation rotatifs et de 1,1 à 1,8 fois le volume V₀ de l'hydrogel polymère.

4. Un procédé selon la revendication 1, 2 ou 3, caractérisé en ce que l'hydrogel polymère est formé en réalisant la polymérisation d'un monomère à insaturation éthylénique avec un agent de réticulation.

5. Un procédé selon la revendication 4, caractérisé en ce que l'hydrogel polymère est un hydrogel polymère ayant un degré de polymérisation basé sur le composant monomère compris dans la gamme de 10 à 100%.

6. Un procédé selon la revendication 5, caractérisé en ce que l'hydrogel polymère est un hydrogel polymère ayant un degré de polymérisation basé sur le composant monomère compris dans la gamme de 20 à 100%.

7. Un procédé selon la revendication 4 ou la revendication 5, caractérisé en ce que la polymérisation du composant monomère est réalisée à une pression inférieure à la pression atmosphérique.

8. Un procédé selon la revendication 7, caractérisé en ce que la polymérisation est mise en oeuvre à une pression comprise dans la gamme d'environ 0,13 à 66,7 kPa (1 à 500 mmHg).

9. Un procédé selon les revendications 4 à 8, caractérisé en ce que le monomère à insaturation éthylénique est au moins un élément choisi parmi l'acide (méth)acrylique (et ses sels), l'acide 2-(méth)acryloyléthanesulfonique (et ses sels), l'acide 2(méth)acrylamide-2-méthyl-propanesulfonique (et ses sels), le (méth) acrylamide, le (méth)acrylate de méthoxypolyéthylèneglycol, le (méth)acrylate de N,N-diméthylaminoéthyle et leurs produits de quaternisation.

10. Un procédé selon l'une quelconque des revendications 4 à 8, caractérisé en ce que le monomère à saturation éthylénique est un acide (méth)acrylique et/ou un sel de celui-ci.

11. Un procédé selon la revendication 10, caractérisé en ce que l'acide (méth)acrylique a 30 à 90 moles% de celui-ci neutralisées avec une substance basique.

12. Un procédé selon l'une quelconque des revendications précédentes, caractérisé en ce que l'hydrogel polymère a une teneur en eau comprise dans la gamme de 40 à 90% en poids.

13. Un procédé d'obtention d'une résine absorbante qui consiste à appliquer une force de cisaillement sur un hydrogel polymère possédant une structure réticulée, de façon à diviser finement l'hydrogel polymère selon un hydrogel polymère particulaire et à sécher l'hydrogel polymère particulaire résultant, caractérisé en ce que la force de cisaillement est appliquée en continu à l'hydrogel polymère tandis qu'il est contenu dans un récipient, l'hydrogel polymère étant maintenu à une température comprise dans la gamme de 40° à 110°C et sous une pression exercée mécaniquement comprise dans la gamme de 0,98 à 147 kPa (0,01 à 1,5 kg/cm²).

14. Un procédé selon la revendication 13, caractérisé par la pulvérisation et/ou la désintégration de l'hydrogel polymère particulaire séché.

15. Un procédé selon la revendication 13 ou la revendication 14, caractérisé en ce que le séchage est réalisé en exposant l'hydrogel polymère à une température comprise dans la gamme de 80 à 250°C à un gaz contenant au moins de la vapeur et possédant un point de rosée compris dans la gamme de 50°C à 100°C.

16. Un procédé selon la revendication 14 ou la revendication 15, caractérisé en ce que la pulvérisation et/ou la désintégration est réalisée avec un broyeur à rouleau (dispositif de pulvérisation rotatif à rouleau).

17. Un procédé d'obtention d'une résine absorbante qui consiste à mélanger une résine absorbante obtenue par un procédé selon la revendication 13 ou la revendication 14 avec un agent de réticulation possédant au moins deux groupes fonctionnels capables de réagir avec le groupe fonctionnel possédé par la résine absorbante et leur permettant de réagir l'un avec l'autre de façon à renforcer une densité de réticulation dans la région de surface de la résine absorbante.
